# EUROPEAN PATENT APPLICATION

(11) **EP 4 796 489 A1**
(43) Date of publication of application: **26.08.2026**
(21) Application number: 25181126.1
(22) Date of filing: 05.06.2025
(51) Int. Cl.: B66F 9/075, B66F 9/24

(54) **INCHING CONTROL SYSTEM AND CONTROL METHOD THEREOF**

(30) Priority: 19.02.2025 KR 20250021741
(71) Applicant: Doosan Bobcat Korea Co., Ltd., Incheon 22503 (KR)
(72) Inventor: LEE, Geonho, 22503 Incheon (KR)
(74) Representative: Studio Torta S.p.A.

(57) **Abstract**

An inching control system and a control method thereof are disclosed. An inching control system according to one aspect of the present disclosure includes a vehicle control unit (10) that performs central control of an industrial vehicle, an electronic control unit (20) that performs power control of the industrial vehicle, and a transmission control unit (30) that performs transmission control for the industrial vehicle and a working machine of the industrial vehicle.

## Description

### CROSS-REFERENCE TO RELATED APPLICATIONS

This application claims the priority of Korean Patent Application No. 10-2025-0021741 filed on February 19, 2025, in the Korean Intellectual Property Office, the disclosure of which is incorporated herein by reference.

### BACKGROUND

### Field

The present disclosure relates to an inching control system and a control method thereof.

### Description of the Related Art

An inching control system of industrial vehicles such as forklifts receives power for travel driving and working machine driving from a single engine, and controls power distribution according to each situation by driver's pressure input to an inching pedal.

In performing this inching pedal operation, although an experienced worker can perform appropriate control depending on the situation, manual control is difficult for a beginner. Accordingly, an automatic mode in which inching control is automatically performed and a manual mode in which the worker manually performs the inching control have been developed. Therefore, by selecting the inching control system manually and automatically, it is possible to prevent misuse by the beginner who has difficulty controlling the inching pedal, prevent clutch disc wear or transmission oil overheating problems caused by misuse of the inching pedal, and significantly reduce worker's fatigue caused by controlling the inching pedal. In addition, by using the inching control only when power switching is required during the work, power loss is reduced, and the efficiency is expected to increase from the fuel efficiency perspective.

Meanwhile, in the case of such conventional automatic inching control system, in addition to the basic industrial vehicle operation system, a distance sensor is additionally included on each of the left and right sides of the front of a mast, and a separate sensor is included for determining the operation of the mast, so as to recognize the traveling driving and the working machine driving. The conventional automatic inching control system may determine that a loading position, that is, a place where a load is loaded and unloaded, is approached when a signal value acquired through these sensors exceeds a threshold value in a small direction. Through this, the conventional automatic inching control system distributes power in the direction of driving the working machine when it is determined that the loading position is approached, and conversely, when the signal value exceeds the threshold value in a large direction, the automatic inching control system determines that the loading position has been left, and distributes power in the direction of the travel driving.

Ultimately, in order to make a decision to automatically select travel driving and the working machine driving, the industrial vehicle should include three additional sensors (two distance sensors and one mast motion sensor) in addition to the sensors that are installed as standard. In this case, there is a problem in that the cost increases due to the additional sensors.

### [Related Art Document]

Korean Registered Patent No. KR 10-1665725 (published on October 6, 2016)

### SUMMARY

One aspect of the present disclosure is to provide an inching control system and a control method thereof, which detects Lift up and Tilt Forward/Backward (Fwd/Bwd) signals requiring working machine inching control by changing inching control from an inching pedal to a vehicle control unit (VCU) by a switching input, and automatically performs the inching control accordingly.

An inching control system according to one aspect of the present disclosure includes: a vehicle control unit (VCU) that performs central control of an industrial vehicle; an electronic control unit (ECU) that performs power control of the industrial vehicle; and a transmission control unit (TCU) that performs transmission control for the industrial vehicle and a working machine of the industrial vehicle, in which the vehicle control unit, when receiving an automatic control signal, transmits the automatic control signal to the transmission control unit to control to block input to the inching pedal, receives at least one of a first signal output from a mast lever of the industrial vehicle in relation to lift, a second signal output from the mast lever in relation to tilt, a third signal output from a forward and reverse neutral lever (FRN lever) of the industrial vehicle, and a fourth signal output from a pedal angle sensor for a brake pedal of the industrial vehicle, receives an engine rotation speed from the electronic control unit, receives a vehicle speed from the transmission control unit, determines a vehicle state of any one of a work mode and a traveling mode based on at least one of the third signal, the fourth signal, and the vehicle speed, when the vehicle state is in the work mode, generates engine control information and inching control information based on at least one of the first signal and the second signal, transmits the engine control information to the electronic control unit, and transmits the inching control information to the transmission control unit.

According to one aspect of the present disclosure, the vehicle control unit may determine that the vehicle state is in the work mode when it is identified that the forward and reverse neutral lever is in a neutral state based on the third signal, the fourth signal, and the vehicle speed or it is identified that the vehicle speed is 5 km/h or less and pedal angle information is not 0%, and the pedal angle information may be a ratio of an angle at which the brake pedal is positioned within an angle range in which the brake pedal is operated.

According to one aspect of the present disclosure, the vehicle control unit may generate slew rate control information to control an inching rate conversion value to a slew rate 50 per second when it is determined that the vehicle state has changed from the work mode to the traveling mode or from the traveling mode to the work mode, and may transmit the slew rate control information to the transmission control unit.

According to one aspect of the present disclosure, the vehicle control unit may identify a rising rate of the working machine based on the first signal, and identify the engine rotation speed and the inching rate matching the rising rate according to a rising rate range for each preset rising step to generate the engine control information and the inching control information.

According to one aspect of the present disclosure, the vehicle control unit may identify a tilting rate of the working machine based on the second signal, and identify the engine rotation speed and the inching rate matching the tilting rate according to a tilting rate range for each preset tilting step to generate the engine control information and the inching control information.

According to one aspect of the present disclosure, the vehicle control unit, when there is a lower step of a step matching the identified engine rotation speed and inching rate, may generate the engine control information and the inching control information so that the engine rotation speed and the inching rate gradually increase by one step from a lowest step to the matching step at a predetermined time interval.

According to one aspect of the present disclosure, the vehicle control unit, when receiving both the first signal and the second signal, may apply a preset weight according to a composite operation to each of the engine rotation speed and the inching rate when generating the engine control information and the inching control information.

According to one aspect of the present disclosure, when the vehicle control unit receives, from an input module of the industrial vehicle, a changed value for at least one of parameters that serve as criteria for determining the work mode, a slew rate per second included in the slew rate control information, an engine rotation speed included in the engine control information, and an inching rate included in the inching control information, the vehicle control unit may operate based on the received value.

According to one aspect of the present disclosure, there is provided a method of controlling an inching control system including a vehicle control unit (VCU) that performs central control of an industrial vehicle, an electronic control unit (ECU) that performs power control of the industrial vehicle, and a transmission control unit (TCU) that performs transmission control for the industrial vehicle and a working machine of the industrial vehicle, and the method includes: receiving an automatic control signal by the vehicle control unit, transmitting the automatic control signal to the transmission control unit by the vehicle control unit to control to block input to the inching pedal, receiving at least one of a first signal output from a mast lever of the industrial vehicle in relation to lift, a second signal output from the mast lever in relation to tilt, a third signal output from a forward and reverse neutral lever (FRN lever) of the industrial vehicle, and a fourth signal output from a pedal angle sensor for a brake pedal of the industrial vehicle, by the vehicle control unit, receiving an engine rotation speed from the electronic control unit by the vehicle control unit, receiving a vehicle speed from the transmission control unit by the vehicle control unit, determining a vehicle state of any one of a work mode and a traveling mode based on at least one of the third signal, the fourth signal, and the vehicle speed, by the vehicle control unit, when the vehicle state is in the work mode, generating engine control information and inching control information based on at least one of the first signal and the second signal, by the vehicle control unit, transmitting the engine control information to the electronic control unit by the vehicle control unit, and transmitting the inching control information to the transmission control unit by the vehicle control unit.

According to one aspect of the present disclosure, the determining of the vehicle state may include determining that the vehicle state is in the work mode when it is identified that the forward and reverse neutral lever is in a neutral state based on the third signal, the fourth signal, and the vehicle speed or it is identified that the vehicle speed is 5 km/h or less and pedal angle information is not 0%, and the method may further include generating slew rate control information to control an inching rate conversion value to a slew rate 50 per second when it is determined that the vehicle state has changed from the work mode to the traveling mode or from the traveling mode to the work mode, and transmitting the slew rate control information to the transmission control unit, and the pedal angle information may be a ratio of an angle at which the brake pedal is positioned within an angle range in which the brake pedal is operated.

According to one aspect of the present disclosure, the generating of the engine control information and the inching control information may include at least of identifying a rising rate of the working machine based on the first signal and identifying the engine rotation speed and the inching rate matching the rising rate according to a rising rate range for each preset rising step to generate the engine control information and the inching control information, and identifying a tilting rate of the working machine based on the second signal and identifying the engine rotation speed and the inching rate matching the tilting rate according to a tilting rate range for each preset tilting step to generate the engine control information and the inching control information, and may further include, when receiving both the first signal and the second signal, applying a preset weight according to a composite operation to each of the engine rotation speed and the inching rate when generating the engine control information and the inching control information.

According to one aspect of the present disclosure, the generating of the engine control information and the inching control information may further include when there is a lower step of a step matching the identified engine rotation speed and inching rate, generating the engine control information and the inching control information so that the engine rotation speed and the inching rate gradually increase by one step from a lowest step to the matching step at a predetermined time interval.

According to one aspect of the present disclosure, the method may further include when receiving, from an input module of the industrial vehicle, a changed value for at least one of parameters that serve as criteria for determining the work mode, a slew rate per second included in the slew rate control information, an engine rotation speed included in the engine control information, and an inching rate included in the inching control information, operating based on the received value.

The inching control system and the control method thereof according to one aspect of the present disclosure can assist the driving of a forklift user who is not skilled in initial driving through automatic control of the inching pedal system.

The inching control system and the control method thereof according to one aspect of the present disclosure detect Lift up and Tilt Forward/Backward (Fwd/Bwd) signals requiring inching control of a working machine and automatically perform inching control accordingly in greater detail than before, thereby reducing driver fatigue and increasing fuel efficiency through optimization of power distribution.

The inching control system and the control method thereof according to one aspect of the present disclosure can minimize an increase in the manufacturing cost of an industrial vehicle by implementing only a basic system without additional sensors.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a diagram schematically illustrating the configuration of an inching control system according to one exemplary embodiment of the present disclosure.
FIG. 2 illustrates an example of a control operation of a vehicle control unit according to one exemplary embodiment of the present disclosure.
FIG. 3 illustrates an example of a slew rate control operation of the vehicle control unit according to one exemplary embodiment of the present disclosure.
FIG. 4 illustrates a change in an inching rate per second by slew rate control according to one exemplary embodiment of the present disclosure.

### DETAILED DESCRIPTION OF THE EMBODIMENT

Hereinafter, the exemplary embodiment of the present disclosure will be described with reference to the accompanying drawings and exemplary embodiments as follows. Scales of components illustrated in the accompanying drawings are different from the real scales for the purpose of description, so that the scales are not limited to those illustrated in the drawings.

Like reference numerals refer to like elements throughout the specification. The present specification does not describe all elements of the exemplary embodiments, and any content that is general in the technical field to which the present disclosure belongs or that overlaps between the exemplary embodiments is omitted. The terms "unit, module, element, block" used in the specification can be implemented in software or hardware, and according to the exemplary embodiments, a plurality of "units, modules, elements, blocks" can be implemented as a single element, or a single "part, module, element, block" can include a plurality of elements.

Throughout the specification, when a part is said to be "connected" to another part, this includes not only direct connection but also indirect connection, and indirect connection includes connection via a wireless communications network.

Additionally, when a part is said to "include" a component, this does not mean that it excludes other components, unless otherwise specifically stated, but rather that it may include other components.

Throughout the specification, when a member is said to be located "on" another member, this includes not only the case where a member is in contact with another member, but also the case where another member exists between the two members.

The terms first, second, or the like are used to distinguish one component from another, and the components are not limited by the aforementioned terms.

Singular expressions include plural expressions unless the context clearly indicates otherwise.

The identification codes in each step are used for convenience of explanation and do not describe the order of each step. Each step may be performed in a different order than specified unless the context clearly indicates a specific order.

Hereinafter, the operating principle and exemplary embodiments of the present disclosure will be described with reference to the attached drawings.

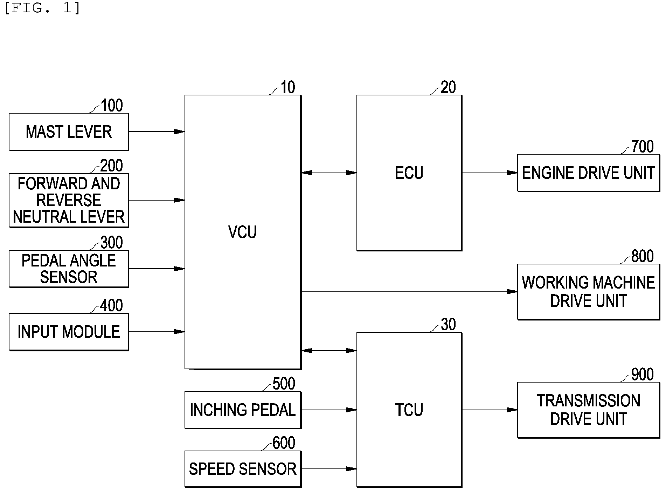

FIG. 1 is a diagram schematically illustrating the configuration of an inching control system according to one exemplary embodiment of the present disclosure.

Referring to FIG. 1, an inching control system of the present disclosure may include a vehicle control unit (VCU) 10 that performs central control of an industrial vehicle, an electronic control unit (ECU) 20 that performs power control of the industrial vehicle, and a transmission control unit TCU 30 that performs transmission control for the industrial vehicle and a working machine of the industrial vehicle.

Although not illustrated, the industrial vehicle may include a body equipped with a driver's cab for boarding a driver and a display device for displaying information, and a wheel drive unit and/or an engine drive unit 700 driven by the control of the vehicle control unit 10 and/or the electronic control unit 20.

The wheel drive unit may include a front wheel, a rear wheel, a driving motor, and a driving motor control module. The engine drive unit 700 may generate power using an electric motor, diesel, LPG, gasoline, or the like as a power source, and provide power to the drive units of industrial vehicles such as the wheel drive unit and a working machine drive unit 800.

The display device may further include an input module that generates input data by the driver's operation. The display device may be a variety of electronic devices such as a touch panel capable of input and output, a button panel, and a display.

In addition, it is desirable that conventional technical configurations (for example, accelerator pedal, brake pedal, steering wheel, lamps, speakers, or the like) for controlling traveling of an industrial vehicle or a vehicle and controlling functions inside the vehicle be provided inside and outside the driver's cabin.

In this case, the driving motor and the driving motor control module may be provided between the front and rear wheels on the lower inside of the driver's cabin.

The driving motor control module may drive the driving motor in a first rotation direction or a second rotation direction to perform a forward motion in the first rotation direction of the front wheels and the rear wheels, or a backward motion in the second rotation direction.

Meanwhile, the driving motor control module may generate a motor current for driving the driving motor in the first rotation direction or the second rotation direction and apply the generated motor current to the driving motor. For example, the driving motor control module may include an H-bridge circuit including a plurality of power switching elements for driving the driving motor in the first rotation direction or the second rotation direction.

Meanwhile, the working machine may be installed at the front of the vehicle body and perform tasks such as unloading, transporting, and loading a load A according to the driver's operation. For example, the working machine may include a carriage that can rise upward or descend downward along the mast rail, and a pair of forks connected to the carriage, and may be operated in the upward or downward direction by the working machine drive unit 800.

To this end, the working machine drive unit 800 may include a direction change control valve that operates the working machine in an upward or downward direction for controlling the height of the working machine. Specifically, the direction change control valve is provided as a hydraulic block equipped with a raising valve and a lowering valve, and may control the opening and closing of the respective flow paths of the raising valve and the lowering valve for raising and lowering the working machine.

Specifically, the working machine drive unit 800 may set the work mode of the working machine based on the raising or lowering of the working machine. Here, the working machine drive unit 800 may control the opening and closing of the respective flow paths of the raising valve and the lowering valve by setting both the work for the raising or lowering of the working machine and the raising and lowering stop mode that restricts the raising and lowering of the working machine based on the output of the mast lever 100 operated by the driver.

Meanwhile, the mast lever 100 may output a raising/lowering selection signal to select the raising, lowering, or stopping of the fork based on the operating state and input it to the vehicle control unit 10.

Based on this, the vehicle control unit 10 may control the working machine through the working machine drive unit 800.

Additionally, the industrial vehicle may further include a forward and reverse neutral lever 200, a pedal angle sensor 300, an inching pedal 500, a speed sensor 600, and a transmission drive unit 900.

The forward and reverse neutral lever (FRN Lever) 200 is a device that controls the traveling direction and gear ratio for forward/reverse driving of an industrial vehicle, and may be configured to include forward/reverse/neutral positions. The forward and reverse neutral lever 200 may provide transmission selection information such as the traveling direction and gear ratio to the vehicle control unit 10 according to the driver's operation. The industrial vehicle starts when the forward and reverse neutral lever 200 is in neutral, and in some modified industrial vehicle models, the brake pedal must be pressed when shifting to operate, but is not limited thereto.

The pedal angle sensor 300 may detect movement or motion of the brake pedal. The pedal angle sensor 300 may provide a brake pedal signal corresponding to a signal representing the displacement and/or movement speed of the brake pedal to the electronic control unit 20.

The inching pedal 500 is a pedal that operates by the driver's pressure to control the speed of the industrial vehicle and perform a braking function at the same time, and may perform the function of a brake while blocking the power of the transmission. The inching pedal 500 may be operated hydraulically or electronically, and when operated electronically, the inching pedal may further include the pedal angle sensor 300 to provide an inching pedal signal corresponding to a signal indicating the displacement and/or movement speed of the inching pedal by the driver's pressure to the transmission control unit 30.

The speed sensor 600 is provided in each wheel or body of the industrial vehicle, and may detect the rotation and/or rotation speed of the wheels due to the traveling of the industrial vehicle. The speed sensor 600 may provide an electrical signal (for example, a voltage signal or a current signal) (hereinafter referred to as a "speed signal") corresponding to the rotation speed of the wheels and/or the driving speed of the vehicle to the transmission control unit 30.

The transmission drive unit 900 may receive transmission control information, such as an inching rate (%) and transmission selection information, from the vehicle control unit 10 and/or the transmission control unit 30 to change gears within the transmission and transmit power to the wheels.

Although not illustrated, the vehicle control unit 10 may include one or more semiconductor elements and may be referred to in various ways, such as a control unit. The vehicle control unit 10 may include, for example, one or more processors and/or one or more memories. Although not illustrated, the electronic control unit 20 may include one or more semiconductor elements and may be referred to in various ways, such as a control unit. The electronic control unit 20 may include, for example, one or more processors and/or one or more memories. Although not illustrated, the transmission control unit 30 may include one or more semiconductor elements and may be referred to in various ways, such as a control unit. The transmission control unit 30 may include, for example, one or more processors and/or one or more memories.

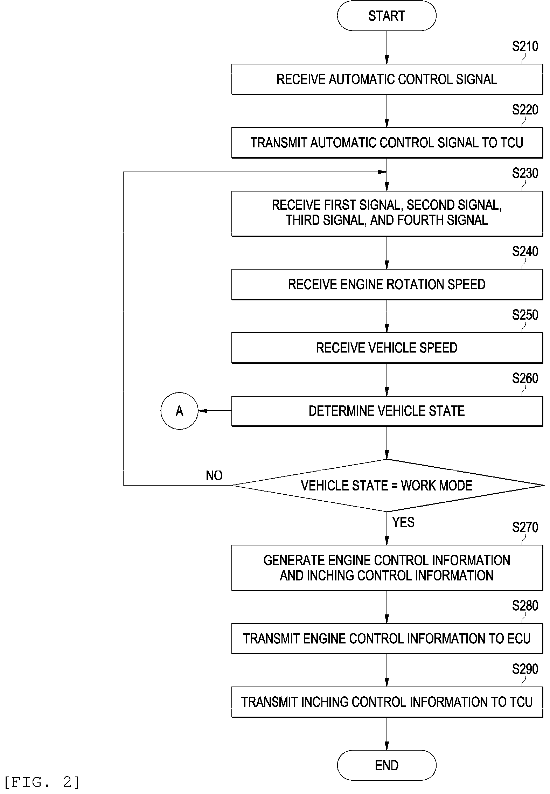

FIG. 2 illustrates an example of a control operation of the vehicle control unit according to one exemplary embodiment of the present disclosure.

Referring to FIG. 2, the vehicle control unit 10 may receive an automatic control signal generated by a driver's input to the input module 400 from the input module 400 (S210).

The automatic control signal may be an electrical signal corresponding to the driver's will to switch to an automatic mode in which the vehicle control unit 10 automatically controls the electronic control unit 20 and the transmission control unit 30 by generating engine control information and/or inching control information by a preset process, rather than the driver manually performing the inching control.

The engine control information may be data and/or electrical signals that control the engine to operate by setting a lower limit value of the engine rotation speed (RPM) that operates the engine.

The inching control information may be data and/or electrical signals that control the transmission by setting an inching rate (%) applied to the transmission.

The vehicle control unit 10 may transmit the automatic control signal to the transmission control unit 30 (S220). When the transmission control unit 30 receives the automatic control signal, the transmission control unit may control the inching pedal 500 to block the driver's input to the inching pedal 500.

Accordingly, when the inching control is in an automatic control mode, the transmission control unit 30 may receive control information from the vehicle control unit 10, not from the inching pedal 500, to identify the inching rate (%) required according to the work situation, and provide the identified inching rate (%) to the transmission drive unit 900.

The vehicle control unit 10 may receive at least one of a first signal output from the mast lever 100 in relation to lift, a second signal output from the mast lever 100 in relation to tilt, a third signal output from the forward and reverse neutral lever 200, and a fourth signal output from the pedal angle sensor 300 (S230).

The vehicle control unit 10 may receive the engine rotation speed from the electronic control unit 20 (S240).

The vehicle control unit 10 may receive a vehicle speed corresponding to a speed signal by the output of the speed sensor 600 from the transmission control unit 30 (S250).

The vehicle control unit 10 may determine the vehicle state of any one of the work mode and the traveling mode based on at least one of the third signal, the fourth signal, and the vehicle speed (S260).

The vehicle control unit 10 may determine that the vehicle state is in the work mode for driving the working machine when it is identified that the forward and reverse neutral lever 200 is in a neutral state based on the third signal, the fourth signal, and the vehicle speed, or when it is identified that the vehicle speed is 5 km/h or less and the pedal angle information is not 0%. The pedal angle information may be a ratio of an angle at which the brake pedal is positioned within an angle range in which the brake pedal is operated, identified by the vehicle control unit 10 according to a brake pedal signal output from a pedal angle sensor 300.

Meanwhile, when it is identified that the forward and reverse neutral lever 200 is not in a neutral state based on the third signal, the fourth signal, and the vehicle speed, the vehicle speed exceeds 5 km/h, or the pedal angle information is not 0%, the vehicle control unit 10 may determine that the vehicle state is not performing operation of the working machine and/or that the vehicle is in the traveling mode in which the vehicle travels. In an exemplary embodiment, the vehicle control unit 10 may generate the inching control information such that the inching rate becomes 0% when the vehicle state is in the traveling mode.

The vehicle control unit 10 may generate the engine control information and inching control information based on at least one of the first signal and the second signal when the vehicle state is in the work mode (S270).

In performing Step S270, the vehicle control unit 10 may identify the rising rate (%) of the working machine based on the first signal. The vehicle control unit 10 may identify the engine rotation speed (RPM) and the inching rate (%) that match the rising rate (%) according to the range of the rising rate (%) of each preset rising step. The vehicle control unit 10 may generate the engine control information and inching control information to include the engine rotation speed (RPM) and the inching rate (%) that match the rising rate (%).

In an exemplary embodiment, based on the first signal, the vehicle control unit 10 identifies Lift-Up Step 1 (inching rate 0%) when the rising rate is 0%, Lift-Up Step 2 (inching rate 20%, 900 rpm) when the rising rate is 1 to 20%, Lift-Up Step 3 (inching rate 40%, 1200 rpm) when the rising rate is 21 to 40%, Lift-Up Step 4 (inching rate 60%, 1600 rpm) when the rising rate is 41 to 60%, Lift-Up Step 5 (inching rate 80%, 2000 rpm) when the rising rate is 61 to 80%, and Lift-Up Step 6 (inching rate 100%, 2400 rpm) when the rising rate is 81 to 100%, and sets the lower limit value of the engine rotation speed (RPM) and the inching rate (%) according to the identified step to generate the engine control information and inching control information. For example, when the current engine rotation speed (RPM) received from the electronic control unit 20 is less than the lower limit value of the engine rotation speed (RPM) of the identified lift-up step, the vehicle control unit 10 may generate the engine control information with the lower limit value of the engine rotation speed (RPM) of the identified lift-up step. Meanwhile, when the current engine rotation speed (RPM) received from the electronic control unit 20 is equal to or more than the lower limit value of the engine rotation speed (RPM) of the identified lift-up step, the vehicle control unit 10 may generate the engine control information to maintain the current engine rotation speed (RPM), and/or not generate the engine control information and generate only the inching control information for the inching rate (%) of the identified lift-up step.

In performing Step S270, the vehicle control unit 10 may identify the tilting rate (%) of the working machine based on the second signal. The vehicle control unit 10 may identify the engine rotation speed (RPM) and the inching rate (%) that match the tilting rate (%) according to the range of the tilting rate (%) for each preset tilting step. The vehicle control unit 10 may generate the engine control information and inching control information to include the engine rotation speed (RPM) and the inching rate (%) that match the tilting rate (%).

In an exemplary embodiment, based on the second signal, the vehicle control unit 10 may identify Tilt Step 1 (inching rate 0%) when the forward (Fwd) or backward (Bwd) tilting rate is 0%, Tilt Step 2 (inching rate 20%, 900 rpm) when the tilting rate is 1 to 20%, Tilt Step 3 (inching rate 40%, 1100 rpm) when the tilting rate is 21 to 40%, Tilt Step 4 (inching rate 60%, 1300 rpm) when the tilting rate is 41 to 60%, Tilt Step 5 (inching rate 80%, 1500 rpm) when the tilting rate is 61 to 80%, and Tilt Step 6 (inching rate 100%, 1700 rpm) when the tilting rate is 81 to 100%, and generate engine control information and inching control information by setting the lower limit value of engine rotation speed (RPM) and inching rate (%) according to the identified step. For example, the vehicle control unit 10 may generate the engine control information with the lower limit value of the engine rotation speed (RPM) of the identified tilt step when the current engine rotation speed (RPM) received from the electronic control unit 20 is lower than the lower limit value of the engine rotation speed (RPM) of the identified tilt step. Meanwhile, when the current engine rotation speed (RPM) received from the electronic control unit 20 is equal to or more than the lower limit value of the engine rotation speed (RPM) of the identified tilt step, the vehicle control unit 10 may generate the engine control information to maintain the current engine rotation speed (RPM), and/or not generate engine control information and generate only the inching control information for the inching rate (%) of the identified tilt step.

In performing Step S270, when there is a lower step of a step matching the engine rotation speed (RPM) and inching rate (%) identified based on the first signal and/or the second signal, the vehicle control unit 10 may generate the engine control information and the inching control information so that the engine rotation speed (RPM) and inching rate (%) gradually increase by one step from the lowest step and/or the current step to the matching step at a predetermined time interval.

For example, when the vehicle state is switched from traveling mode to work mode and Lift-Up Step 3 is identified, the vehicle control unit 10 may perform four step increases from Lift-Up Step 0 to Lift-Up Step 3. In this case, the vehicle control unit 10 may generate the engine control information and inching control information so that the engine rotation speed (RPM) and inching rate (%) are gradually changed and applied according to the step change by setting a switching delay every time the step increases by 1. The switching delay may be 300 ms, but is not limited thereto.

In performing Step S270, when receiving both the first signal and the second signal, the vehicle control unit 10 may apply preset weights according to the composite operation for each of the engine rotation speed (RPM) and the inching rate (%).

For example, when both the first signal and the second signal are received and Lift-Up Step 2 (inching rate 20%, 900 rpm) and Tilt Step 3 (inching rate 40%, 1100 rpm) are identified, the vehicle control unit 10 may apply preset weights according to the composite operation to each of the inching rate (%) and the engine rotation speed (RPM), thereby calculating the inching rate of 30% and a lower limit value of the engine rotation speed of 1000 rpm. However, this is only an example, and various modifications are of course possible.

The vehicle control unit 10 may transmit the engine control information to the electronic control unit 20 (S280).

The electronic control unit 20 may control the engine drive unit 700 based on the engine control information, thereby controlling the engine output (RPM).

The vehicle control unit 10 may transmit the inching control information to the transmission control unit 30 (S290).

The transmission control unit 30 may identify the inching rate (%) based on the inching control information.

The transmission control unit 30 may provide the identified inching rate (%) to the transmission drive unit 900.

Meanwhile, when receiving a changed value input according to the user's change intention for the input module 400 from the input module 400, the vehicle control unit 10 may perform the processes of Steps S260 to S290 based on the received value. In addition, the vehicle control unit 10 may perform the processes of Steps S310 to S320 described below based on the received value.

The changed value may be a changed value set for at least one of the parameters that serve as criteria for determining the work mode, the slew rate per second corresponding to the inching rate (%) conversion value included in the slew rate control information described below, the engine rotation speed (RPM) included in the engine control information, and the inching rate (%) included in the inching control information. For example, for a step where the engine rotation speed (RPM)-inching rate (%) is set, the value of each of the engine rotation speed (RPM) and the inching rate (%) for each step, the vehicle speed and pedal angle that serve as criteria for determining the work mode, the increase speed and/or decrease speed of the inching rate (%) by the slew rate per second when the vehicle state changes, or the like may be changed according to the driver's input to the input module 400.

The slew rate control information may be data on the set value of the slew rate per second.

Accordingly, the driver may customize the inching control method to the working speed preferred by the driver by changing the values that serve as criteria for the vehicle control unit 10 to automatically perform the inching control.

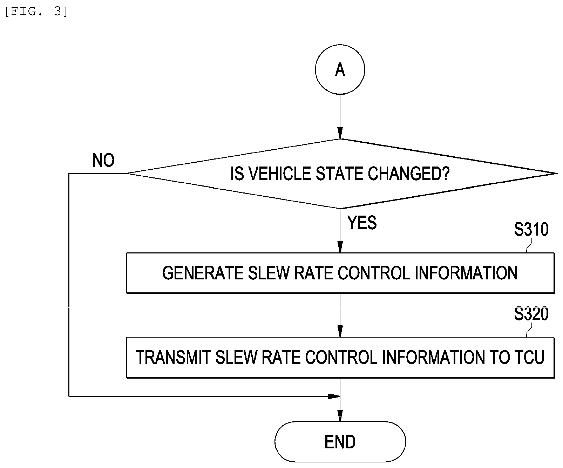

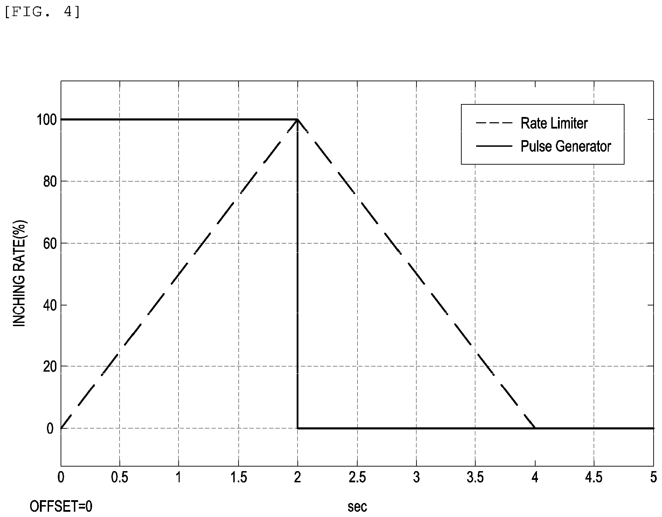

FIG. 3 illustrates an example of the slew rate control operation of the vehicle control unit according to an exemplary embodiment of the present disclosure. FIG. 4 illustrates a change in the inching rate per second by the slew rate control according to an exemplary embodiment of the present disclosure.

Referring to FIG. 3, the vehicle control unit 10 may determine whether the vehicle state has changed from the work mode to the traveling mode or from the traveling mode to the work mode when performing Step S260.

When the vehicle control unit 10 determines that the vehicle state is changed, the slew rate control information may be generated to control the inching rate (%) conversion value to a slew rate 50 per second, by the vehicle control unit 10, as illustrated in FIG. 4 (S310).

For example, referring to FIG. 4, when the vehicle state changes from the work mode to the traveling mode at 2 seconds, the slew rate per second is applied as 50, so the inching rate is reduced to 50% per second, which may take 2 seconds for the power switching.

The vehicle control unit 10 may transmit the slew rate control information to the transmission control unit 30 (S320).

Accordingly, when performing power switching according to changes in vehicle state, the vehicle control unit 10 may alleviate the shock caused by the power switching occurring at once by controlling the power switching according to the slew rate per second.

The above-described specification can be implemented as a computer-readable code on a medium in which a program is recorded. The computer-readable medium may include all kinds of recording devices that store data that can be read by a computer system. Examples of the computer-readable medium include a hard disk drive HDD, a solid state disk SSD, a silicon disk drive SDD, a ROM, a RAM, a CD-ROM, a magnetic tape, a floppy disk, an optical data storage device, and may also include a medium implemented in the form of a carrier wave (for example, transmission via the Internet). Therefore, the above-detailed description should not be construed as limiting in all aspects and should be considered as illustrative. The scope of the present specification should be determined by a reasonable interpretation of the appended claims, and all changes within the equivalency range of the present specification are included in the scope of the present specification.

In addition, although the above description has been made focusing on the exemplary embodiments, these are merely examples and do not limit the present specification, and those with ordinary knowledge in the field to which this specification pertains will recognize that various modifications and applications not exemplified above are possible without departing from the essential characteristics of the present exemplary embodiment. For example, each component specifically illustrated in the exemplary embodiments can be modified and implemented. Moreover, the differences related to such modifications and applications should be interpreted as being included in the scope of the present specification defined in the appended claims.

## Claims

1. An inching control system comprising:
a vehicle control unit (10) that performs central control of an industrial vehicle;
an electronic control unit (20) that performs power control of the industrial vehicle; and
a transmission control unit (30) that performs transmission control for the industrial vehicle and a working machine of the industrial vehicle,
wherein the vehicle control unit (10),
when receiving an automatic control signal, transmits the automatic control signal to the transmission control unit (30) to control to block input to an inching pedal (500),
receives at least one of a first signal output from a mast lever (100) of the industrial vehicle in relation to lift, a second signal output from the mast lever (100) in relation to tilt, a third signal output from a forward and reverse neutral lever (200) of the industrial vehicle, and a fourth signal output from a pedal angle sensor (300) for a brake pedal of the industrial vehicle,
receives an engine rotation speed from the electronic control unit (20),
receives a vehicle speed from the transmission control unit (30),
determines a vehicle state of any one of a work mode and a traveling mode based on at least one of the third signal, the fourth signal, and the vehicle speed,
when the vehicle state is in the work mode, generates engine control information and inching control information based on at least one of the first signal and the second signal,
transmits the engine control information to the electronic control unit (20), and
transmits the inching control information to the transmission control unit (30).

2. The inching control system according to claim 1, wherein the vehicle control unit (10) determines that the vehicle state is in the work mode when it is identified that the forward and reverse neutral lever (200) is in a neutral state based on the third signal, the fourth signal, and the vehicle speed or it is identified that the vehicle speed is 5 km/h or less and pedal angle information is not 0%, and
the pedal angle information is a ratio of an angle at which the brake pedal is positioned within an angle range in which the brake pedal is operated.

3. The inching control system according to claim 2, wherein the vehicle control unit (10)
generates slew rate control information to control an inching rate conversion value to a slew rate 50 per second when it is determined that the vehicle state has changed from the work mode to the traveling mode or from the traveling mode to the work mode, and
transmits the slew rate control information to the transmission control unit (30).

4. The inching control system according to claim 1, 2 or 3, wherein the vehicle control unit (10)
identifies a rising rate of the working machine based on the first signal, and
identifies the engine rotation speed and the inching rate matching the rising rate according to a rising rate range for each preset rising step to generate the engine control information and the inching control information.

5. The inching control system according to any one of claims from 1 to 4, wherein the vehicle control unit (10)
identifies a tilting rate of the working machine based on the second signal, and
identifies the engine rotation speed and the inching rate matching the tilting rate according to a tilting rate range for each preset tilting step to generate the engine control information and the inching control information.

6. The inching control system according to claim 4 or 5, wherein the vehicle control unit (10), when there is a lower step of a step matching the identified engine rotation speed and inching rate, generates the engine control information and the inching control information so that the engine rotation speed and the inching rate gradually increase by one step from a lowest step to the matching step at a predetermined time interval.

7. The inching control system according to any one of claims from 1 to 6, wherein the vehicle control unit (10), when receiving both the first signal and the second signal, applies a preset weight according to a composite operation to each of the engine rotation speed and the inching rate when generating the engine control information and the inching control information.

8. The inching control system according to claim 3, wherein when the vehicle control unit (10) receives, from an input module (400) of the industrial vehicle, a changed value for at least one of parameters that serve as criteria for determining the work mode, a slew rate per second included in the slew rate control information, the engine rotation speed included in the engine control information, and the inching rate included in the inching control information, the vehicle control unit (10) operates based on the received value.

9. A method of controlling an inching control system including a vehicle control unit (10) that performs central control of an industrial vehicle, an electronic control unit (20) that performs power control of the industrial vehicle, and a transmission control unit (30) that performs transmission control for the industrial vehicle and a working machine of the industrial vehicle, the method comprising:
receiving an automatic control signal by the vehicle control unit (10),
transmitting the automatic control signal to the transmission control unit (30) by the vehicle control unit (10) to control to block input to an inching pedal (500),
receiving at least one of a first signal output from a mast lever (100) of the industrial vehicle in relation to lift, a second signal output from the mast lever (100) in relation to tilt, a third signal output from a forward and reverse neutral lever (200) of the industrial vehicle, and a fourth signal output from a pedal angle sensor (300) for a brake pedal of the industrial vehicle, by the vehicle control unit (10),
receiving an engine rotation speed from the electronic control unit (20) by the vehicle control unit (10),
receiving a vehicle speed from the transmission control unit (30) by the vehicle control unit (10),
determining a vehicle state of any one of a work mode and a traveling mode based on at least one of the third signal, the fourth signal, and the vehicle speed, by the vehicle control unit (10) ,
when the vehicle state is in the work mode, generating engine control information and inching control information based on at least one of the first signal and the second signal, by the vehicle control unit (10),
transmitting the engine control information to the electronic control unit 20) by the vehicle control unit (10), and
transmitting the inching control information to the transmission control unit (30) by the vehicle control unit (10).

10. The method according to claim 9, wherein the determining of the vehicle state includes determining that the vehicle state is in the work mode when it is identified that the forward and reverse neutral lever (200) is in a neutral state based on the third signal, the fourth signal, and the vehicle speed or it is identified that the vehicle speed is 5 km/h or less and pedal angle information is not 0%, and
the method further includes
generating slew rate control information to control an inching rate conversion value to a slew rate 50 per second when it is determined that the vehicle state has changed from the work mode to the traveling mode or from the traveling mode to the work mode, and
transmitting the slew rate control information to the transmission control unit (30), and
the pedal angle information is a ratio of an angle at which the brake pedal is positioned within an angle range in which the brake pedal is operated.

11. The method according to claim 9 or 10, wherein the generating of the engine control information and the inching control information includes
at least one of identifying a rising rate of the working machine based on the first signal and identifying the engine rotation speed and the inching rate matching the rising rate according to a rising rate range for each preset rising step to generate the engine control information and the inching control information, and identifying a tilting rate of the working machine based on the second signal and identifying the engine rotation speed and the inching rate matching the tilting rate according to a tilting rate range for each preset tilting step to generate the engine control information and the inching control information, and
further includes, when receiving both the first signal and the second signal, applying a preset weight according to a composite operation to each of the engine rotation speed and the inching rate when generating the engine control information and the inching control information.

12. The method according to claim 11, wherein the generating of the engine control information and the inching control information further includes
when there is a lower step of a step matching the identified engine rotation speed and inching rate, generating the engine control information and the inching control information so that the engine rotation speed and the inching rate gradually increase by one step from a lowest step to the matching step at a predetermined time interval.

13. The method according to claim 10, 11 or 12, further comprising, when receiving, from an input module (400) of the industrial vehicle, a changed value for at least one of parameters that serve as criteria for determining the work mode, a slew rate per second included in the slew rate control information, the engine rotation speed included in the engine control information, and the inching rate included in the inching control information, operating based on the received value.
